# EUROPEAN PATENT APPLICATION

(11) **EP 0 662 763 A2**
(43) Date of publication of application: **12.07.1995**
(21) Application number: 94309351.8
(22) Date of filing: 14.12.1994
(51) Int. Cl.: H04M 3/50, H04L 12/58

(54) **Integrated electronic mailbox**

(30) Priority: 06.01.1994 US 178196
(71) Applicant: AT&T Corp., New York, NY 10013-2412 (US)
(72) Inventor: Anderl, Ewald Christoph, Middletown, New Jersey 07748 (US); Stephens, Glenn Alan, Belmar, New Jersey 07719 (US)
(74) Representative: Buckley, Christopher Simon Thirsk

(57) **Abstract**

An integrated electronic message storage and retrieval system (200) provides for storage (in 202) and retrieval of a plurality of electronic messages having a plurality of data types, such as voice data type, video data type, binary data type, fax data type and text data type. Each electronic message is associated with a specific message destination (e.g., 214). All electronic messages directed to a specific message destination are placed into a specific electronic data structure comprising an electronic mailbox, irrespective of the data type of the electronic message.

## Description

### Technical Field

The invention relates generally to electronic message storage and retrieval techniques, and more particularly to techniques for providing an integrated electronic mailbox for storing and retrieving various types of electronic messages addressed to a specific individual or entity.

### Background of the Invention

Various techniques have been developed for electronic message storage and retrieval. These techniques often utilize the concept of a voice mailbox, wherein incoming voice messages directed to a specific individual are forwarded to the mailbox and stored for future retrieval. Examples of voice mailbox systems include conventional telephone answering machines and automated telephone answering systems offered, for example, by AT&T, Octel, VMX, Ameritech, Bell Atlantic, Pacific Bell, and others.

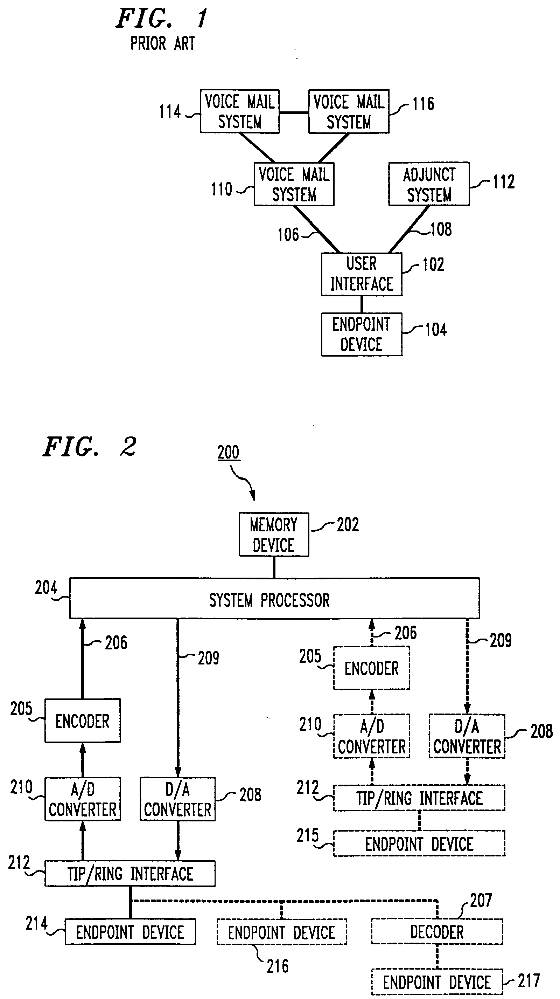

In addition to voice messages, other types of messages may be electronically stored and retrieved, such as electronic mail (e-mail) messages, facsimile (fax) messages, and video messages. As shown in FIG. 1, these electronic messages are accessed by means of a user interface 102 and endpoint devices 104, such as a telephone, a personal computer video display, and/or a fax machine. In some instances, the user interface 102 and the endpoint device 104 may be combined into a single unit. The user interface 102 is connected to communications links 106, 108 which are linked to voice mail system 110, and adjunct system 112, respectively. The electronic message systems may each be assigned one or more telephone numbers, such that communications links 106, 108 are formed over conventional telephone lines. Voice mail system 110 may be connected to additional voice mail systems 114, 116 to form a voice mail system network. Adjunct system 112 may be, for example, an e-mail system.

As shown in FIG. 1, existing electronic message systems do not integrate different types of electronic messages. For example, voice messages stored in voice mail system 110 can only be retrieved from that system and not from adjunct system 112. Similarly, e-mail messages stored in adjunct system 112 can only be retrieved from that system and not from voice mail system 110. If it is desired to integrate a plurality of different electronic message systems, integration must be performed at the user interface level. The resulting system topology is disadvantageous in that the user interface 102 must establish separate communications links for each electronic message system to be accessed. For example, if access to voice mail system 110 is desired, communications link 108 must be established, typically by instructing the user interface 102 to dial up a first telephone number corresponding to the voice mail system. Then, if an e-mail message is to be retrieved, the system user must instruct the user interface to dial up a second telephone number corresponding to adjunct system 112.

Existing electronic message storage and retrieval systems lack compatibility and integration. If an individual wishes to review all incoming electronic messages, this task generally involves independently accessing a plurality of electronic message systems. Each message system must be checked to ascertain whether or not it contains an incoming message. If this step is not taken, the individual to whom the message is directed could overlook the message, leading to potentially undesirable consequences. For example, an individual may typically check a voice mail system for incoming messages, and then check a personal computer file to ascertain whether or not any incoming e-mail messages have arrived.

The task of separately checking each electronic message system for incoming messages is inefficient and time-consuming, especially in view of the recent proliferation of various types of messaging systems. Furthermore, with existing system topologies, it is difficult or impractical to link together related messages from different message systems, such as a still-frame video image and a related text message in e-mail form. What is needed is an electronic message storage and retrieval system which fully integrates a plurality of electronic message types, such as voice, video, and/or e-mail.

### Summary of the Invention

According to a preferred embodiment disclosed herein, an electronic message system is characterized in that the system provides for storing and retrieving a plurality of electronic messages including a plurality of data types such as voice data, binary data, facsimile data, text data and electronic mail data. Each electronic message is associated with a corresponding message destination and a corresponding data type identifier specifying the data type of the message. Endpoint devices are used to retrieve messages. Endpoint devices are associated with corresponding message destinations. In response to the data type identifier and the message destination, a system processor retrieves electronic message data types compatible with a selected endpoint device, such that the selected endpoint device will produce intelligible output from the electronic message. In this manner, electronic messages having a plurality of data types may be placed into a single store rather than a plurality of individual stores. All electronic messages directed to a specific message destination are placed into a specific integrated electronic mailbox, irrespective of the data type of the electronic message.

### Brief Description of the Drawing

FIG. 1 is a hardware block diagram illustrating a prior-art electronic message storage and retrieval system;
FIG. 2 is a hardware block diagram illustrating the integrated electronic message storage and retrieval system according to an embodiment disclosed herein; and
FIG. 3 is a diagram showing the data structures employed by the integrated electronic message storage and retrieval system of FIG. 2.

### Detailed Description

With reference to FIG. 2, a hardware block diagram illustrating a preferred embodiment of the integrated electronic message storage and retrieval system 200 is shown. The integrated electronic message storage and retrieval system includes a memory device 202 connected to a system processor 204 having a plurality of input ports 206 and output ports 209. Each output port 209 of the system processor 204 is coupled to a digital-to-analog (D/A) converter 208, and each input port 206 of the system processor 204 is coupled to an encoder 205 which encodes signals from a respective analog-to-digital (A/D) converter 210. A tip-ring interface 212 is connected to an analog input of the A/D converter 210 and to an analog output of the D/A converter 208. The tip-ring interface 212 provides a communications interface to one or more user endpoint devices 214, 216 and/or to endpoint device 217 via decoder 207. These endpoint devices 214, 216, 217 may include, for example, telephones, fax machines, video phones, personal computers, AT&T video imaging systems, or the like. Each endpoint device 214, 216 or 217 is equipped to originate and/or to retrieve at least one type of electronic message such as, for example, voice, video, and/or text messages.

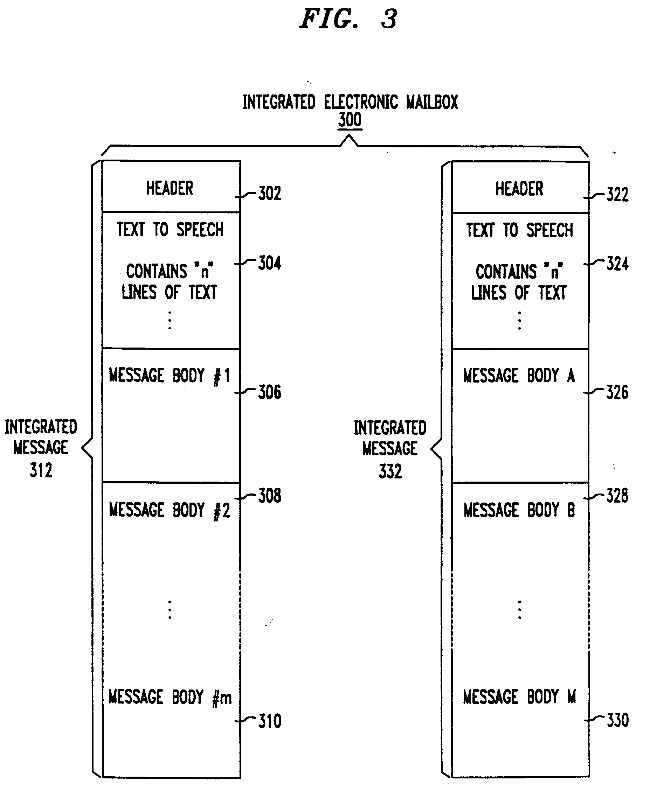

The integrated electronic message storage and retrieval system 200 is equipped to store and retrieve a plurality of electronic message types, such as voice, video, binary, facsimile, text, and/or e-mail. Binary message types may include FSK, PSK, PAM, PCM, QAM, digital messages, or the like. All incoming messages directed to a specific user or entity are placed into a single integrated electronic mailbox 300 (FIG.3), irrespective of the type of message involved. These messages are stored in and retrieved from memory device 202 (FIG. 2). Each specific electronic message type corresponds to a particular type of electronic message system. These electronic message systems exist in the form of endpoint devices 214, 216 which may include, as described above, voice mail systems, video messaging systems, and/or e-mail networks.

Memory device 202 includes one or more data storage drives such as magnetic disk drives, optical drives, and/or magnetic tape drives. The function of the data storage drive is to store electronic messages in binary form. For a typical electronic message system involving 5,000 users, it is desirable to have a storage capacity on the order of 3 Gigabytes. All messages designated for a particular user or entity are stored in a single, integrated mailbox data structure, irrespective of the type or types of messages contained within the mailbox.

System processor 204 may include a microprocessor such as, for example, an Intel 8486 processor operating at a speed of 50 mHz. The system processor 204 also includes a working memory area, in the form of random-access memory (RAM), which is used to store an integrated electronic mailbox downloaded from memory device 202. Conventional devices may be employed for use as encoder 205, A/D converter 210, D/A converter 208, tip/ring interface 212, and optional decoder 207. The selection of suitable devices for encoder 205, A/D converter 210, D/A converter 208, tip/ring interface 212, and decoder 207 are well-known to those skilled in the art.

The operation of electronic message storage and retrieval system 200 is as follows. An incoming message, as well as message recipient identification data corresponding to a designated message recipient for the incoming message, are communicated to endpoint device 214. The designated message recipient is the individual or entity to which the sender of the message directs the message. Message recipient identification data are roughly analogous to the addresses of conventional post office mailboxes which are used to direct conventional hard-copy mail to specific individuals, families, corporate entities, and organizations. The message recipient identification data may be conceptualized as specifying a message destination. The message is communicated in the form of an electronic signal transmitted over a conventional communications channel 218, such as an analog wire pair having a tip line and a ring line. However, it is to be understood that the communications channel 218 could be digital, and/or incorporate a combination of analog and digital elements.

To electronically store a message such that the message is stored in the integrated message 312 data structure of FIG. 3, the following sequence of steps is implemented. Tip/ring interface 212 extracts the electronic signal representing the incoming message from the analog wire pair. This signal is fed to A/D converter 210 where the signal is converted to digital form, and then to encoder 205 which encodes the signal into a format suitable for storage within the integrated message 312 data structure of FIG. 3. The encoder 205 encodes one or more electronic message types, such as voice, video, e-mail, text, fax, etc. Different message types may be subjected to different encoding procedures. Since a particular endpoint device 214 may be adapted, for example, to originate and/or to retrieve only one specific electronic message type, the encoder 205 encodes a given electronic message type such that endpoint devices not equipped to retrieve that electronic message type will not produce humanly-discernible output data, whereas endpoint devices 214 that are equipped to retrieve this electronic message type will produce the electronic message. In the context of an endpoint device 214 such as a voice telephone, no humanly-discernible output means that the voice telephone produces substantially no audio output when portions of an integrated message 312 are retrieved which include nonvoice data.

Encoder 205 encodes incoming electronic messages with data type information specifying the electronic message type, such as voice, video, and/or e-mail. The encoder 205 also encodes specific data types in accordance with specific encoding schemes known to those skilled in the art, as will be described in greater detail hereinafter. An encoded electronic message is stored as a message body 306, 308, 310, 326, 328, 330 within an integrated message 312, 332 data structure (FIG. 3). Each message body 306, 308, 310, 326, 328, 330 is stored in memory device 202 as a file with identifiable characteristics setting forth the electronic message type of the message body. The identifiable characteristics may be file extensions such as .AVI, .BMP, .PCX, or the like. Message bodies 306, 308, 310 corresponding to a single, integrated message 312 are stored as linked files. For example, file extension .AVI is used to identify a file containing video information encoded in an Audio-Video Interleaved format by encoder 205. File extension .BMP identifies image files encoded in a Bit Map format. The bit map and audio-video interleaved formats were developed by the Microsoft Corporation of Redmond, WA., United States of America, and are known to those skilled in the art. Similarly, a file using an extension of .PCX is encoded in PC paintbrush format. Encoder 205 may encode voice data using an encoding scheme known to those skilled in the art as 80PCM or other known voice encoding schemes.

Some endpoint devices 214 that are equipped to retrieve a given message type will not require a decoder 207 to produce the retrieved electronic message, whereas other endpoint devices 215 may require a decoder 207 for this purpose. By way of illustration, encoder 205 encodes an incoming video message such that, when the encoded message is retrieved by a voice-only endpoint device 214 , such as a conventional telephone, the encoded video information will be played back by the telephone as silence. Encoding and decoding processes used to accomplish the aforementioned functions are well-known to those skilled in the art.

The encoded signal is fed to system processor 204, where the message is incorporated into an integrated message 312 within an integrated electronic mailbox 300 data structure (FIG. 3) corresponding to the designated message recipient. This data structure can be used to store all types of incoming messages. Furthermore, the data structure contains information which is accessible from any endpoint device 214 (FIG. 2).

To electronically retrieve a message from the electronic message storage and retrieval system 200 such that the retrieved message is produced in humanly intelligible form from the integrated message 312 data structure of FIG. 3, the following sequence of steps is implemented. When it is desired to retrieve an incoming message, the designated message recipient accesses the electronic message storage and retrieval system 200 from an endpoint device 214 and enters message recipient identification data. This message recipient identification data specifies a particular message destination corresponding to the message recipient. The message storage and retrieval system 200 is accessed by placing a telephone call to the system from an endpoint device 214, 216, or 217.

A second embodiment of the message retrieval system associates specific message recipients with corresponding endpoint devices 214, 216, or 217, obviating the need for entering message recipient identification data. In this manner, each tip/ring interface 212 may be dedicated to a specific set of endpoint devices 214, 216, or 217 corresponding to a specific system user. Once the user dials up the message storage and retrieval system 200 from an endpoint device 214, 216, or 217, the system accesses a tip/ring interface lookup table stored in memory device 202. The tip/ring interface lookup table associates each tip/ring interface 212 with specific message recipient identification data setting forth the message destination. The second embodiment is well-suited to applications where relative ease of use is important, and also where the appropriate system security measures can be implemented to control access to the various endpoint devices.

A third embodiment uses an incoming telephone call identification ("caller ID") feature currently provided by various telephone companies to identify particular message recipients and/or specific endpoint devices 214, 216, or 217. The Caller ID feature, and the ICLID signal provided by Caller ID, are well-known to those skilled in the art. For example, suitable Caller ID systems include the system currently offered in the United States by Bell Atlantic to subscribers located within Area Code 609, and the system used by Pacific Bell throughout the San Francisco Bay Area. In areas offering the Caller ID service, a given endpoint device and system user can be associated with a specific corresponding telephone number, the ICLID signal for a given telephone number serving to identify the message recipient and the resulting message destination to the integrated electronic message system.

After the message destination has been identified, for example, by using any of the techniques described above, the system processor 204 locates the integrated electronic mailbox 300 (FIG. 3) corresponding to the message destination. The contents of this electronic mailbox are downloaded from memory device 202 into the working memory area of system processor 204. The contents of the electronic mailbox 300 are then converted from digital to analog form by D/A converter 208. The analog-converted version of the electronic mailbox 300 contents are fed to the tip/ring interface 212, which transmits the contents of the mailbox over communications channel 218 to endpoint device 214. Some endpoint devices 214 will produce electronic messages without the use of a decoder 207, directly from an integrated message 312 data structure. However, other endpoint devices 215 may require a decoder 207 to produce humanly-discernible data. The use or non-use of a decoder 207 depends upon specific system requirements and is a design parameter easily determined by those skilled in the art.

System processor 204 may be employed for the purpose of sending only selected portions of an integrated message 312 to an endpoint device 214 via D/A converter 208 and tip/ring interface 212. These selected portions include those message bodies 306, 308, 310 having data types compatible with the endpoint device 214 being used to retrieve a given integrated message 312. From the message destination which has been ascertained as described above with reference to the discussion of endpoint devices 214, 216, 217, the system processor 204 is provided with information specifying the type of endpoint device 214 being used to retrieve a given integrated message 312. If desired, a lookup table may be stored in memory device 202 associating each message destination with a corresponding endpoint device 214 type.

Based upon the type of endpoint device 214 being used to retrieve a message, the system processor 204 selects one or more message bodies 306,308,310 to send to D/A converter 208. The system processor 204 selects these message bodies on the basis of the file extensions (i.e., .AVI, .BMP, .PCX) associated with each message body 306, 308, 310. For example, if endpoint device 214 is an audio-visual terminal, the system processor 204 sends files having extension .AVI to this endpoint device. For an endpoint device 216 such as a voice telephone, the system processor 204 would send portions of the integrated message 312 representing the audio portion of a video clip, and/or header information containing a voice description of the contents of the integrated message 312. This header information may be prepared by system processor 204 from the contents of one or more message bodies 306, 308, 310 and then stored in a header 302 data structure within integrated message 312. For example, if message body 306 represents an incoming fax, the conventional fax header information is automatically converted into voice format by system processor 204 using methods known to those skilled in the art. This conventional fax header information typically includes the name of the sender and the number of pages in the fax message. If endpoint device 214 is a fax machine, system processor 204 sends to D/A converter only those message bodies 306, 308, 310 containing fax data.

As will be described in greater detail hereinafter with reference to FIG. 3, the electronic mailbox 300 contains one or more integrated electronic messages 312, 332. In turn, each integrated electronic message 312, 332 contains a plurality of data blocks. Some of these data blocks contain data which can be processed by an arbitrarily-selected endpoint device to produce a humanly intelligible message, whereas other data blocks contain data which, when processed by this endpoint device, could produce humanly unintelligible outputs. For example, the electronic mailbox 300 may include a first data block representing speech fragments and a second data block representing video information.

The aforementioned message retrieval techniques overcome the problem of incompatibility between endpoint devices 214, 216, 217 and data types. For example, if the data block representing video information is fed to an audio-only endpoint device, this device would produce a garbled, humanly unintelligible audio output from the video data. Although this problem may be eliminated by stripping all video data blocks from the contents of the electronic mailbox 300 (FIG. 3) before the contents are sent to the audio endpoint device, an alternate approach is possible. The contents of the electronic mailbox 300 can be transferred throughout the entire message storage and retrieval system as a single, unified data structure, no matter where the mailbox contents are sent. In this manner, messages retrieved on a first endpoint device 214 could be stored for later interpretation and/or processing on a second endpoint device 216. Taking this approach, endpoint devices 214, 216, 217 and/or decoder 207 are equipped with processors for selectively retrieving specific message bodies 306, 308, 310 from an integrated message 312. In this manner, the message storage and retrieval system 200 (FIG. 2) transfers the contents of a given electronic mailbox 300 (FIG. 3) throughout the entire system as a set of one or more fully integrated compound documents.

Refer now to FIG. 3 which illustrates the mailbox data structure used by the electronic message storage and retrieval system 200 (FIG. 2). An integrated electronic mailbox 300 contains one or more integrated messages 312, 332, such that each integrated message 312, 332 is a fully integrated compound document. Each integrated message 312, 332 contains one or more message bodies. Integrated message 312 contains message body #1 (306), message body #2 (308), and message body #n (310). Similarly, integrated message 332 contains message body A (326), message body B (328), and message body M (330).

Each integrated message 312, 332 includes a header 302, 322, respectively. Headers 302, 322 contain pieced-together text-to-speech fragments. These fragments may contain a brief description of the subject matter of the integrated message , the identity of the message originator, the type of endpoint device sending the message, and/or the specific endpoint device sending the message. For example, a typical header could contain digital data specifying the voice message "you have received a message from the FAX gateway".

After the header 302, 322, each integrated message 312, 332 includes a data block of text to speech 304, 324, respectively. This block contains n lines of text in the form of a voice message which is retrievable on endpoint devices 214 (FIG. 2) which have voice capabilities. Message bodies 306, 308, 310, 326, 328, 330 may include any of binary data encoded as voice silence, an executable program, an interactive voice response (IVR) application, and/or video information encoded as voice silence. Each integrated message 312, 332 can contain any arbitrary number of message bodies to meet the design requirements of specific system applications.

The unique data structures and encoding schemes described above enable an endpoint device 214 to retrieve a message without the production of a garbled, humanly unintelligible data output from a data type not compatible with this endpoint device.

It is to be understood that the above-described embodiments are merely illustrative principles of the invention and that many variations may be devised by those skilled in the art without departing from the scope of the invention. It is therefore intended that such variations be included within the scope of the following claims.

## Claims

1. An electronic message system characterized in that the system comprises:
message storage means; and message retrieval means; wherein the message storage means and the message retrieval means store and retrieve, respectively, a plurality of electronic messages, at least one of which is embodied in a plurality of data types selected from the group of voice data type, video data type, binary data type, facsimile data type, text data type, and electronic mail data type, each electronic message being associated with a corresponding message destination and a corresponding plurality of data type identifiers specifying the data types comprising the electronic message; and
organization means for organizing the electronic messages to combine all electronic messages having the same message destination into a single electronic data structure.

2. An electronic message system as set forth in Claim 1 further characterized in that the system includes first and second endpoint devices each adapted to convert an electronic message into a humanly intelligible form, the first endpoint device including a voice communications device selected from the group of a wireline telephone, a cordless telephone, a wireless telephone, and a cellular telephone, the second endpoint device including a nonvoice communications device being selected from the group of a fax machine, a personal computer, a cellular telephone, a laptop computer, a modem, and a video communications device, such that the first endpoint device converts voice data electronic messages into humanly intelligible form and the second endpoint device converts at least one of video data electronic messages, binary data electronic messages, facsimile data electronic messages, text data electronic messages, and electronic mail data, electronic messages into humanly intelligible form, the first and second endpoint devices each being associated with a corresponding message destination.

3. An electronic message system as set forth in Claim 2 further characterized in that the system includes message encoding means for encoding a nonvoice message comprising at least one of video data electronic messages, binary data electronic messages, facsimile data electronic messages, text data electronic messages, and electronic mail data electronic messages such that, upon receipt of the nonvoice message, the first endpoint device produces substantially no audio output, and the second endpoint device produces a humanly intelligible message.

4. An electronic message system as set forth in Claim 3 further characterized in that the message storage and retrieval means comprises:
(a) memory means for storing the electronic messages;
(b) system processor means coupled to the memory means for placing the electronic messages into the memory means, for associating the electronic messages with corresponding data type identifiers, and for retrieving the electronic messages from the memory means based upon the data type identifier and the message destination;
(c) digital to analog converter means for converting a digital electronic message into an analog electronic message, the digital to analog converter means having a digital input terminal and an analog output terminal, the digital input terminal being coupled to the system processor means;
(d) tip/ring interface means connected to the analog output terminal of the digital to analog converter means for coupling the digital to analog converter means to a conventional tip/ring wire pair; and
(e) analog to digital converter means for converting an analog electronic message into a digital electronic message, the analog to digital converter having an analog input terminal connected to the tip/ring interface means and a digital output terminal connected to the message encoder means; the message encoder means being coupled to the system processor means.

5. An electronic message system as set forth in Claim 4 further characterized in that the system comprises digital signal processor means coupled to the message encoder means, the digital input terminal of the digital to analog converter means, and the system processor means for processing message data representing one or more electronic messages.

6. An electronic message system as set forth in Claim 3, characterized in that the electronic message includes:
(a) a header block containing data representing speech;
(b) a text to speech block containing data representing n lines of text, wherein n is greater than or equal to one; and
(c) m message body blocks containing data representing an electronic message, wherein m is greater than or equal to one.

7. An electronic message system as set forth in Claim 4, characterized in that the electronic message includes:
(a) a header block containing data representing speech;
(b) a text to speech block containing data representing n lines of text, wherein n is greater than or equal to one; and
(c) m message body blocks containing data representing an electronic message, wherein m is greater than or equal to one.
